# EUROPEAN PATENT SPECIFICATION

(11) **EP 3 090 993 B1**
(45) Date of publication and mention of the grant of the patent: **16.01.2019**
(21) Application number: 15001363.9
(22) Date of filing: 07.05.2015
(51) Int. Cl.: C05C 9/02

(54) **PROCESS FOR THE PREPARATION OF NITROGEN FERTILIZER**
VERFAHREN ZUR HERSTELLUNG VON STICKSTOFFDÜNGER
PROCÉDÉ POUR LA PRÉPARATION D'ENGRAIS AZOTÉS

(43) Date of publication of application: 09.11.2016
(73) Proprietor: Advachem SA, 7334 Hautrage (BE)
(72) Inventor: Francis, Georges, 7334 Hautrage (BE)
(74) Representative: Powis de Tenbossche, Roland

(56) References cited:
- US-A- 3 462 256
- US-A- 4 599 102
- US-A1- 2004 168 493

## Description

The invention relates to a process for the preparation in a batch reactor of at least one ton of a liquid nitrogen fertilizer with a nitrogen weight content of 20 to 32%.

Various processes have been proposed in the past for the manufacture of liquid nitrogen fertilizer.

For example, WO 02/16458 discloses a process for the preparation of a stable liquid nitrogen fertilizer comprising the steps of:
1) combining formaldehyde, urea and ammonia in a basic solution, with a formaldehyde/urea/ammonia molar ratio of about 0.6-1 / 1.0 / 0.25 - 0.35;
2) heating the solution to about 80C to about 95°C, and holding while maintaining the pH of at least 7 for at least 45 minutes; and
3) cooling the solution to less than about 50°C, and adjusting the pH to about 9.5 to about 10.5.

Such a process is carried out in batches. It has been observed that the step of combining Formaldehyde, urea and ammonia was quite important for achieving stable transparent fertilizer having specific controllable releasable nitrogen characteristics, as well as quick nitrogen releasable characteristics.

Said document is silent about the importance of the step of combining formaldehyde, urea and ammonia.

EP1254878 claims a process for the preparation of transparent liquid highly stable nitrogen fertilizer comprising like WO 02/16458 a step of combining formaldehyde, urea and ammonia; a heating step at a temperature from 70°C to 110°C for 10 to 30minutes and a cooling step below the heating temperature. As stated in an Italian procedure, the process according to EP1254878 is a process with one single reaction step from 70°C - 110°C for 10 to 30 minutes. This process has thus for aim to limit the total reaction time at a temperature above 70°C so as to ensure that the composition has a high content of unreacted urea or free urea. Said process when carried out for example in batches of one or more tons gives fertilizer composition which are unstable and/or non transparent and/or having variable nitrogen release properties. Said document is silent about the importance of the step of combining formaldehyde, urea and ammonia.

Contrary to the single step process of EP1254878, the process of the invention is a two steps process, namely a process comprising a first controlled reaction step during the controlled addition of ammonia to the urea - formaldehyde solution, and a second reaction step after the end of the addition of all the ammonia. US2004/168493A1 discloses a method of preparing urea-formaldehyde plant nutrient solution where water, urea, formalin and an alkaline material (KOH) are mixed at pH greater than 7, the mixture is heated to temperature of about 40°C to about 55°C until all urea dissolves, ammonia is added during heating over a period of 30-45 minutes and the mixture is heated to a temperature of at least about 90°C for about 60-70 minutes. The aldehyde:urea ratio is 0.8-2:1 and the urea:ammonia ratio is about 2-3:1. The resulting product is cooled down.

It has been observed that by using a process of the invention having one or more characteristics disclosed in the present specification, it was possible to prepare a liquid transparent stable nitrogen fertilizer having very reliable nitrogen release properties for each batches, and even if the UFC used has some variation of the Urea/formaldehyde molar ratio or some property variation. The process of the invention enables to produce fertilizer rich in condensed or polymerized methylene - urea nitrogen, such as rich in triazone. For example more than 50% by weight (such as from 55% to 70 or 75% by weight) of the nitrogen is present in the composition as methylene-urea Nitrogen, while keeping still about 30 to 45% by weight of the nitrogen as ureic nitrogen.

It has also been discovered that the presence of some chlorine anion and/or NH₄⁺ cation in the reaction medium seems to be favourable for controlling the reaction, while increasing the stability of the composition at low temperature and while not damaging the fertilizer properties.

The process of the invention is thus a process for the preparation in a batch reactor of at least 10 Tons of a liquid nitrogen fertilizer with a nitrogen weight content from 20 to 32%, in which formaldehyde, urea and ammonia are reacted together in liquid form, said process comprising at least the step of adding progressively during at least 15 minutes an ammonia aqueous solution (with an ammonia content of 20 to 32% by weight) to a formaldehyde - urea solution so as to control the progressive increase of temperature of the reaction medium up to 80 - 95°C.

The process of the invention is more specifically a process for the preparation in a batch reactor of at least one Ton, advantageously at least 5 Tons, preferably at least 10 Tons of a liquid nitrogen fertilizer with a nitrogen weight content from 20 to 32%, said process comprising at least the following steps operated at atmospheric pressure:
Step A : An aqueous urea formadehyde solution is prepared in a batch reactor by mixing together at least compounds selected from the group consisting of water, formaldehyde, urea, UFC and mixtures thereof and at least a base, the so prepared aqueous urea formaldehyde solution having an urea / formaldehyde molar ratio comprised between 1.05 and 1.45, advantageously between 1.2 and 1.4 ;
Step B : An aqueous ammonia solution with an ammonia content of 20 to 32% by weight is added to the aqueous urea formaldehyde solution prepared in Step A in the batch reactor, possibly some base being added to control the pH;
Step C: The solution prepared in Step B is heated and maintained at a temperature comprised between 80-100°C for at least 30 minutes, but advantageously less than 75 minutes, while controlling the pH between 8 and 10.5 by adding base, the amount of ammonia solution added is such that the molar ratio NH3/Urea is comprised between 0.2 and 0.4, advantageously between 0.25 and 0.30;
Step D: The solution prepared in Step C is cooled at a temperature of less than 40°C in or outside the batch reactor;
   said process being further characterized in that:
   - The solution prepared in Step A is heated at a temperature of 55 to 65°C for at least 5 minutes;
   - When the temperature of the solution prepared in step A is still above at least 40°C, Step B is started by adding aqueous ammonia solution progressively during a period of at least 15 minutes, so as to control the progressive increase of temperature of the solution up to 80 - 95°C (this is advantageous as it enables a better control of the basic character of the reaction medium, with or without adding further base, such as NaOH, or with addition of limited amount of base, such as NaOH) ;
   - When the temperature of the solution prepared in Step B is still above 75°C, Step C is started.

The process of the invention is thus a process in which the addition of the ammonia solution to the solution comprising urea and formaldehyde, possibly in the form of a precondensate, is well controlled so as to avoid as much as possible the formation of polymerization compounds with high molecular weight, meaning preparing a urea/formaldehyde/ammonia reaction product having a more precise profile with less of high polymerized or condensed compounds and with less low polymerized or condensed compounds. When adding too large quantity of ammonia in the urea formaldehyde composition it has been observed an exothermic reaction. In the process of the invention said exothermic reaction is controlled so as to be low, or even very low or very well controlled. The well controlled adding of ammonia or ammonia solution to the reaction mixture (while reacting) enables also a safer and proper reaction, avoiding for example local overheating reaction zones.

According to the invention, in Step B, the progressive increase of temperature of the solution is such that the increase of temperature follows substantially a linear heating increase pattern with an error margin comprised between -2°C and +2°C.

Preferably, Step B is carried out for a time of at least 25 minutes, advantageously at least 35 minutes, such as from 35 minutes up to 75 minutes, especially from 40 to 55 minutes.

Details and characteristics of preferred embodiments of the invention are one or more of the followings, especially a combination of more of the followings:
- Step B has a final temperature comprised between 80 - 85°C.
- Step C is carried for a time of at least 45 minutes.
- Step B is started after that the urea is fully dissolved in Step A.
- during Step B, the pH of the solution is controlled by adding a base so as to ensure a pH between 8 and 10.5, advantageously between 8.5 and 9.5.
- the heating in Step B is controlled so that the increase of temperature is less than 2°C/minute, advantageously less than 1.5°C per minute.
- the heating in Step B is controlled so that the increase of temperature is less than 1.2°C/minute, advantageously equal or less than 1.0°C per minute.
- in Step D, the pH of the liquid fertilizer is controlled to 8 - 10.5, advantageously to 9.8 - 10.2 by adding a base.
- in Step D, the temperature of the liquid fertilizer is reduced from 80-90°C to 40°C at an average rate of more than 1°C/minute.
- Step A is carried out as follow:
   - water, UFC and base are mixed together and heated up to a temperature comprised between 55 and 65°C, with possible further addition of a base so as to ensure a pH between 8 and 10,
   - to the mixture water, UFC, base at a temperature of at least 50°C, urea is added and mixed, said mixture being heated up to a temperature of 50 - 60°C and maintained at a temperature or 50-60°C for at least 10 minutes, the pH of said mixture being maintained at a pH between 8 and 10, advantageously between 8.5 and 9, by adding if required some base.
- at least a base selected from the group consisting of Sodium hydroxide, triethanolamine and mixtures thereof is used as base in one or more process steps, advantageously in all the process steps.
- in step C, a base is added to the solution substantially during all step C, advantageously at a substantially constant rate.
- in step C, a base in the form of an aqueous composition containing advantageously at least 70% by weight water, is added to the solution, said base aqueous composition being preheated before being added to the solution, advantageously at a temperature greater than 60°C, preferably from 70 to 90°C.
- at least step B and step C are carried out in presence of chlorine anion (Cl⁻), advantageously in the form of Na⁺ Cl⁻, NH₄⁺ Cl⁻ and mixtures thereof. It seems that the chlorine anion (possibly with some cation(s) Na⁺, NH4⁺) has some action ensuring a more controllable reaction when adding ammonia, as well as during Step C.
- at least Step B and Step C are carried out in presence of chlorine anion (Cl⁻), the total Cl⁻ anion, being comprised between 0.1 and 100mg, advantageously between 1 and 20mg per kg of the composition in step B and step C respectively.
- at least in Step B and in Step C are carried out in presence of chlorine anion Cl⁻, the ratio chlorine anion Cl⁻ / urea mole being comprised between 0.00001 and 0.01, advantageously between 0.00005 and 0.0001.
- steps B and C are carried out under stirring, advantageously vigorous stirring. Advantageously the stirring is adapted for ensuring a turbulent flow of the solution present in the batch reactor, at least for step B and/or for step C. For example the Reynolds number of the impeller is above 2000, advantageously above 5000.

Details of specific embodiments of the invention will be disclosed hereafter by means of example, as well as by referring to comparative examples.

The examples of the invention are given hereafter as examples only of preferred embodiments.

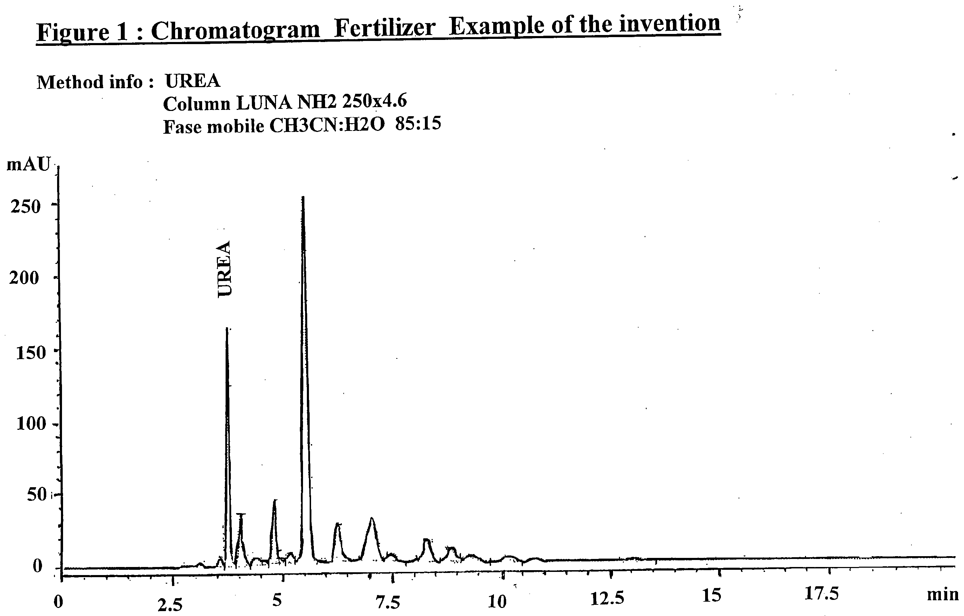

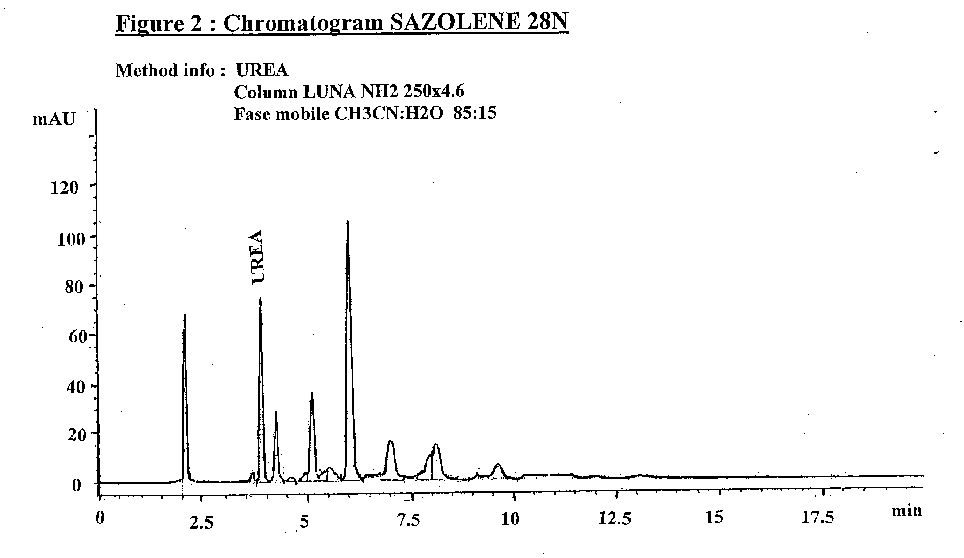

In said description reference is made to the attached figures 1,2 and 3 showing respectively a HPLC curve of a nitrogen fertilizer prepared by a process of the invention, and two HPLC curves of a nitrogen fertilizer prepared by two processes not of the invention.

In said example, the following raw materials have been used :
Water : water with a medium hardness (CaCO₃ content of 70 to 100mg/L) and with a NaCl content of 57 - 114mg/L (Chlorine content 35 - 70 mg/L.
UFC : UFC 80 with a solid content of about 80% (Urea - formaldehyde precondensate containing about 23.5% by weight Urea and about 56.5% by weight Formaldehyde, corresponding to a Urea / formaldehyde molar ratio of about 4.8. The pH of the aqueous precondensate is about 7.5 at 25°C. The density of the condensate is about 1.3 g/cm³.
TEA : triethanolamine in the form of an aqueous solution (42.5% by weight triethanolamine and 57.5 % by weight water) .
Aqueous Ammonia : solution comprising 24.5% by weight NH₃ and 75.5 by weight Water. The density of the ammonia solution is about 0.91 kg/L (at 20°C)
Urea : in the form of prills or granules with an average particle size in weight of about 5 - 10mm.
NaOH solution : in the form of an aqueous solution comprising 20% by weight NaOH and 80% by weight water.

### Example (preferred embodiment according to the invention)

In a batch reactor with 60000 liters provided with an impeller (blade impeller) and with an outer heating jacket, 16600 kg UFC, 50kg TEA and 5 kg NaOH solution were mixed. The pH of the mixture was about 8-9 (pH measured at 20°C).

The mixture was heated at about 60°C for at least 10 minutes.

20025kg urea was then added and mixed progressively in the mixture of UFC.

The mixture UFC + Urea is then heated to 55-60°C for about 40minutes. 5kg of NaOH solution is further added. The pH of the mixture at the end of said heating step (measured at 55-60°C) was about 8.5 - 9. The mixture was a clear solution.

Ammonia solution was then slowly added so as to increase the temperature substantially linearly from 55°C up to 90-95°C within 55 - 60 minutes. The amount of ammonia added was controlled so that the heat released by the exothermic reaction was controlled so as to have the control of the temperature increase. During said step of adding ammonia to the mixture, no external heat or substantially no external heat was necessary. During said exothermic reaction, the pH was controlled so that the pH (measured at the temperature of the reaction medium) is comprised between about 8.5 and 9.5. Some 5 kg NaOH solution was required when the temperature of the reacting medium was about 85°C.

This first reacting step is thus well controlled.

For ensuring at the end of the reaction of the ammonia, the reaction mixture is maintained at a temperature of 90-95°C for 45 to 50minutes. In this step, some external heat can be required, depending on the heat still released by the exothermic reaction. During said step, the pH is controlled so as to ensure a pH (measured at 90-95°C) comprised between about 8.5 - 9.5. About 15kg NaOH solution was required.

The reaction between ammonia and UFC and Urea is complete. The cooling of the mixture is controlled so as to ensure a progressive cooling. The cooling is of about 20 to 30°C per 10 minutes.

The total reaction time of Ammonia, UFC and Urea at a temperature above 90°C is about 60 minutes. (the total reaction time of Ammonia, UFC and Urea at a temperature above 70°C is about 105-110 minutes).

The composition when cooled had a pH of about 10 (measured at 25°C), a viscosity of about 30-35 centipoise (measured at 25°C, Brookfield), a refraction index of about 1.4630 (measured at 25°C, Refractometer). The nitrogen content of the fertilizer is about 28.3% by weight, about 40-42% by weight of the nitrogen being in the form of ureic nitrogen, while about 58-60% by weight of the nitrogen being in the form of nitrogen derived from methylene - urea (with a large proportion of triazone).
Figure 1 shows the HPLC graph of the fertilizer Formaldehyde of example, and
Figure 2 the HPLC graph of Sazolene (R) a fertilizer having a nitrogen content of 28%.

The comparison of the two graphs shows clearly that the compositions are different, the fertilizer of the example having a high content of triazone and a high content of nitrogen as ureic nitrogen. In the fertilizer of the process of the invention, a large (and even a very large) proportion of the nitrogen is in the form of triazone and urea.

The molar ratio Formaldehyde/Urea/ammonia of said example of the invention is about 0.8/1/0.34.

The following tables give the various peaks of the fertilizer of the example of the invention (time of detection, area, %, comments), as well for the Sazolene (R) fertilizer.

| Fertilizer of the invention (example) | | | | |
|---|---|---|---|---|
| peak number | minute (about) | area (about) | % area of the peak with respect to the total areas of the peaks | comments |
| 1 | 3.6 | 50.8 | 1.1 | |
| 2 | 3.8 | 729.7 | 15.7 | urea |
| 3 | 4.0 | 207.1 | 4.5 | |
| 4 | 4.4 | 91.2 | 2.0 | |
| 5 | 4.6 | 19.8 | 0.4 | |
| 6 | 4.8 | 246.7 | 5.3 | |
| 7 | 5.0 | 21.8 | 0.5 | |
| 8 | 5.2 | 79.8 | 1.7 | |
| 9 | 5.5 | 1910.6 | 41.1 | triazone |
| 10 | 6.1 | 39.3 | 0.8 | |
| 11 | 6.3 | 249.9 | 5.4 | |
| 12 | 7.1 | 432.3 | 9.3 | |
| 13 | 7.5 | 75.9 | 1.6 | |
| 14 | 8.3 | 196.8 | 4.2 | |
| 15 | 8.9 | 137.4 | 3.0 | |
| 16 | 9.3 | 97.5 | 2.1 | |
| 17 | 10.2 | 63.6 | 1.4 | |
| 18 | 13.1 | 53.1 | 1.1 | |
| Total | | 4653 | 100 | |

| Fertilizer Sazolène | | | | |
|---|---|---|---|---|
| peak number | minute (about) | area (about) | % area of the peak with respect to the total areas of the peaks | comments |
| 1 | 2.1 | 743.3 | 30.9 | |
| 2 | 3.7 | 31.7 | 1.3 | |
| 3 | 3.9 | 320.8 | 13.3 | urea |
| 4 | 4.2 | 158.1 | 6.6 | |
| 5 | 4.5 | 25.9 | 1.1 | |
| 6 | 4.9 | 28.5 | 1.2 | |
| 7 | 5.1 | 231.6 | 9.6 | |
| 8 | 5.4 | 45.7 | 1.9 | |
| 9 | 5.5 | 72.2 | 3.0 | |
| 10 | 6.0 | 821.8 | 34.2 | triazone |
| 11 | 7.0 | 217.3 | 9.0 | |
| 12 | 7.9 | 116.2 | 4.8 | |
| 13 | 8.1 | 188.4 | 7.8 | |
| 14 | 8.6 | 33.8 | 1.4 | |
| 15 | 9.6 | 111.2 | 4.6 | |
| Total | | 4653 | 100 | |

The process of the invention enables thus the preparation of fertilizer composition with 50 up to 75 by weight of the nitrogen in the form of condensed or polymerized methylene - urea nitrogen (especially essentially as triazone), while the remaining nitrogen is essentially ureic nitrogen.

In another example of the invention similar to the preceding, the molar ratio Formaldehyde/Urea/ammonia was adjusted so as to be about 0.9/1/0.39 giving then a fertilizer with a larger quantity of triazone (more slow release or controlled release) and less nitrogen as ureic nitrogen (quick release).

## Claims

1. Process for the preparation in a batch reactor of at least one Ton, advantageously at least 5 Tons, preferably at least 10 Tons of a liquid nitrogen fertilizer with a nitrogen weight content from 20 to 32%, said process comprising at least the following steps operated at atmospheric pressure:
Step A : An aqueous urea formaldehyde solution is prepared in a batch reactor by mixing together at least compounds selected from the group consisting of water, formaldehyde, urea, UFC and mixtures thereof and at least a base, the so prepared aqueous urea formaldehyde solution having an urea / formaldehyde molar ratio comprised between 1.05 and 1.45, advantageously between 1.2 and 1.4 ;
Step B : An aqueous ammonia solution with an ammonia content of 20 to 32% by weight is added to the aqueous urea formaldehyde solution prepared in Step A in the batch reactor, possibly some base being added to control the pH;
Step C: The solution prepared in Step B is heated and maintained at a temperature comprised between 80-100°C for at least 30 minutes, but advantageously less than 75 minutes, while controlling the pH between 8 and 10.5 by adding base, the amount of ammonia solution added is such that the molar ratio NH₃/Urea is comprised between 0.2 and 0.4, advantageously between 0.25 and 0.30;
Step D: The solution prepared in Step C is cooled at a temperature of less than 40°C in or outside the batch reactor;
said process being further **characterized in that**:
- The solution prepared in Step A is heated at a temperature of 55 to 65°C for at least 5 minutes;
- When the temperature of the solution prepared in step A is still above at least 40°C, Step B is started by adding aqueous ammonia solution progressively during a period of at least 15 minutes, so as to control the progressive increase of temperature of the solution up to 80 - 95°C, while controlling the pH above 8 with or without adding some base;
- When the temperature of the solution prepared in Step B is still above 75°C, Step C is started, and
- in Step B, the progressive increase of temperature of the solution is such that the increase of temperature follows substantially a linear heating increase pattern with an error margin comprised between - 2°C and +2°C.

2. The process of claim 1, **characterized in that** Step B is carried out for a time of at least 25 minutes, advantageously at least 35 minutes.

3. The process of anyone of the claims 1 to 2, **characterized in that** Step B has a final temperature comprised between 80 - 85°C.

4. The process of anyone of the claims 1 to 3, **characterized in that** Step C is carried for a time of at least 45 minutes.

5. The process of anyone of the preceding claims, **characterized in that** in step C, a base is added to the solution substantially during all step C, advantageously at a substantially constant rate.

6. The process of anyone of the preceding claims, **characterized in that** in step C, a base in the form of an aqueous composition containing advantageously at least 70% by weight water, is added to the solution, said base aqueous composition being preheated before being added to the solution, advantageously at a temperature greater than 60°C, preferably from 70 to 90°C.

7. The process of anyone of the preceding claims, **characterized in that** Step B is started after that the urea is fully dissolved in Step A.

8. The process of anyone of the preceding claims, **characterized in that** during Step B, the pH of the solution is controlled by adding a base so as to ensure a pH between 8 and 10.5, advantageously between 8.5 and 9.5.

9. The process of anyone of the preceding claims, **characterized in that** the heating in Step B is controlled so that the increase of temperature is less than 2°C/minute, advantageously less than 1.5°C per minute.

10. The process of the preceding claim, **characterized in that** the heating in Step B is controlled so that the increase of temperature is less than 2°C/minute, advantageously less than 1.5°C per minute.

11. The process of anyone of the preceding claims, **characterized in that** in Step D, the pH of the liquid fertilizer is controlled to 8 - 10.5, advantageously to 9.8 - 10.2 by adding a base.

12. The process of anyone of the preceding claims, **characterized in that** in Step D, the temperature of the liquid fertilizer is reduced from 80-90°C to 40°C at an average rate of more than 1°C/minute.

13. The process of anyone of the preceding claims, **characterized in that** Step A is carried out as follow:
- water, UFC and base are mixed together and heated up to a temperature comprised between 55 and 65°C, with possible further addition of a base so as to ensure a pH between 8 and 10,
- to the mixture water, UFC, base at a temperature of at least 50°C, urea is added and mixed, said mixture being heated up to a temperature of 50 - 60°C and maintained at a temperature or 50-60°C for at least 10 minutes, the pH of said mixture being maintained at a pH between 8 and 10, advantageously between 8.5 and 9, by adding if required some base.

14. The process of any one of the preceding claims, **characterized in that** at least a base selected from the group consisting of Sodium hydroxide, triethanolamine and mixtures thereof is used as base in one or more process steps, advantageously in all the process steps.

15. The process of anyone of the preceding claims, **characterized in that** at least step B and step C are carried out in presence of chlorine anion (Cl⁻), advantageously in the form of Na⁺ Cl⁻, NH₄⁺ Cl⁻, and mixtures thereof.

16. The process of anyone of the preceding claims, **characterized in that** at least Step B and Step C are carried out in presence of chlorine anion (Cl-), the total Cl-anion being comprised between 0.1 and 100mg, advantageously between 1 and 20mg per kg of the composition in step B and step C respectively.

17. The process of anyone of the preceding claims, **characterized in that** at least in Step B and in Step C are carried out in presence of chlorine anion Cl⁻, the ratio chlorine anion Cl⁻ / urea mole being comprised between 0.00001 and 0.01, advantageously between 0.00005 and 0.0001.

## Patentansprüche

1. Verfahren zur Herstellung von mindestens einer Tonne, vorteilhafterweise mindestens 5 Tonnen, vorzugsweise mindestens 10 Tonnen eines flüssigen Stickstoffdüngemittels mit einem Stickstoffgewichtsgehalt von 20 bis 32% in einem Chargenreaktor, wobei das Verfahren mindestens die folgenden Schritte umfasst, die bei Atmosphärendruck durchgeführt werden:
Schritt A: Eine wässrige Harnstoffformaldehydlösung wird in einem Chargenreaktor hergestellt, indem mindestens Verbindungen, die aus der Gruppe ausgewählt sind, die aus Wasser, Formaldehyd, Harnstoff, UFC und Mischungen davon und mindestens einer Base besteht, miteinander gemischt werden, wobei die so hergestellte wässrige Harnstoffformaldehydlösung ein molares Harnstoff/Formaldehyd-Verhältnis zwischen 1,05 und 1,45, vorzugsweise zwischen 1,2 und 1,4 aufweist;
Schritt B: Eine wässrige Ammoniaklösung mit einem Ammoniakgehalt von 20 bis 32 Gew.-% wird zu der in Schritt A hergestellten wässrigen Harnstoffformaldehydlösung in dem Chargenreaktor gegeben, wobei möglicherweise etwas Base zur Steuerung des pH-Werts zugegeben wird;
Schritt C: Die in Schritt B hergestellte Lösung wird erwärmt und bei einer Temperatur zwischen 80 und 100°C für mindestens 30 Minuten, aber vorteilhafterweise weniger als 75 Minuten gehalten, während der pH-Wert durch Zugabe von Base zwischen 8 und 10,5 eingestellt wird, die Menge der zugesetzten Ammoniaklösung ist so, dass das Molverhältnis NH₃/Harnstoff zwischen 0,2 und 0,4 liegt, vorzugsweise zwischen 0,25 und 0,30;
Schritt D: Die in Schritt C hergestellte Lösung wird in dem oder außerhalb des Chargenreaktors auf eine Temperatur von weniger als 40°C abgekühlt;
wobei das Verfahren ferner **dadurch gekennzeichnet ist, dass**:
- die in Schritt A hergestellte Lösung mindestens 5 Minuten lang auf eine Temperatur von 55 bis 65°C erwärmt wird;
- wenn die Temperatur der in Schritt A hergestellten Lösung immer noch über mindestens 40°C liegt, Schritt B durch fortschreitende Zugabe von wässriger Ammoniaklösung während eines Zeitraums von mindestens 15 Minuten gestartet wird, um den fortschreitenden Temperaturanstieg der Lösung bis 80 - 95°C zu steuern, während der pH-Wert mit oder ohne Zugabe einer Base über 8 eingestellt wird;
- wenn die Temperatur der in Schritt B hergestellten Lösung immer noch über 75°C liegt, Schritt C gestartet wird; und
- in Schritt B der fortschreitende Temperaturanstieg der Lösung derart ist, dass der Temperaturanstieg im Wesentlichen einem linearen Erwärmungsanstiegsmuster mit einem Fehlerbereich zwischen -2°C und +2°C folgt.

2. Verfahren nach Anspruch 1, **dadurch gekennzeichnet, dass** Schritt B für eine Zeitdauer von mindestens 25 Minuten, vorteilhafterweise mindestens 35 Minuten durchgeführt wird.

3. Verfahren nach einem der Ansprüche 1 bis 2, **dadurch gekennzeichnet, dass** Schritt B eine Endtemperatur zwischen 80 und 85°C aufweist.

4. Verfahren nach einem der Ansprüche 1 bis 3, **dadurch gekennzeichnet, dass** Schritt C für eine Zeitdauer von mindestens 45 Minuten durchgeführt wird.

5. Verfahren nach einem der vorhergehenden Ansprüche, **dadurch gekennzeichnet, dass** in Schritt C der Lösung im Wesentlichen während des gesamten Schrittes C eine Base zugesetzt wird, vorteilhafterweise mit einer im Wesentlichen konstanten Geschwindigkeit.

6. Verfahren nach einem der vorhergehenden Ansprüche, **dadurch gekennzeichnet, dass** in Schritt C der Lösung eine Base in Form einer wässerigen Zusammensetzung, die vorteilhafterweise mindestens 70 Gew.-% Wasser enthält, zugesetzt wird, wobei die basische wässrige Zusammensetzung vor der Zugabe zu der Lösung vorgewärmt wird, vorteilhafterweise auf eine Temperatur von mehr als 60°C, vorzugsweise auf 70 bis 90°C.

7. Verfahren nach einem der vorhergehenden Ansprüche, **dadurch gekennzeichnet, dass** Schritt B gestartet wird, nachdem der Harnstoff in Schritt A vollständig gelöst ist.

8. Verfahren nach einem der vorhergehenden Ansprüche, **dadurch gekennzeichnet, dass** während des Schritts B der pH-Wert der Lösung durch Zugabe einer Base so eingestellt wird, dass ein pH-Wert zwischen 8 und 10,5, vorzugsweise zwischen 8,5 und 9,5, sichergestellt ist.

9. Verfahren nach einem der vorhergehenden Ansprüche, **dadurch gekennzeichnet, dass** das Erwärmen in Schritt B so gesteuert wird, dass der Temperaturanstieg weniger als 2°C/Minute beträgt, vorteilhafterweise weniger als 1,5°C pro Minute.

10. Verfahren nach dem vorhergehenden Anspruch, **dadurch gekennzeichnet, dass** das Erwärmen in Schritt B so gesteuert wird, dass der Temperaturanstieg weniger als 2°C/Minute beträgt, vorteilhafterweise weniger als 1,5°C pro Minute.

11. Verfahren nach einem der vorhergehenden Ansprüche, **dadurch gekennzeichnet, dass** in Schritt D der pH des flüssigen Düngemittels durch Zugabe einer Base auf 8 bis 10,5, vorteilhaft auf 9,8 bis 10,2, eingestellt wird.

12. Verfahren nach einem der vorhergehenden Ansprüche, **dadurch gekennzeichnet, dass** in Schritt D die Temperatur des flüssigen Düngemittels mit einer durchschnittlichen Geschwindigkeit von mehr als 1°C/Minute von 80 bis 90°C auf 40°C verringert wird.

13. Verfahren nach einem der vorhergehenden Ansprüche, **dadurch gekennzeichnet, dass** Schritt A wie folgt durchgeführt wird:
- Wasser, UFC und Base werden zusammengemischt und auf eine Temperatur zwischen 55 und 65°C erwärmt, wobei möglicherweise weiterhin eine Base zugegeben wird, um einen pH-Wert zwischen 8 und 10 sicherzustellen,
- der Mischung Wasser, UFC, Base bei einer Temperatur von mindestens 50°C wird Harnstoff zugegeben und gemischt, wobei die Mischung auf eine Temperatur von 50 - 60°C erwärmt und mindestens 10 Minuten bei einer Temperatur von 50 - 60°C gehalten wird, wobei der pH-Wert der Mischung bei einem pH-Wert zwischen 8 und 10, vorzugsweise zwischen 8,5 und 9 gehalten wird, indem wenn erforderlich etwas Base zugegeben wird.

14. Verfahren nach einem der vorhergehenden Ansprüche, **dadurch gekennzeichnet, dass** mindestens eine Base ausgewählt aus der Gruppe bestehend aus Natriumhydroxid, Triethanolamin und Gemischen davon in einem oder mehreren Verfahrensschritten als Base verwendet wird, vorteilhafterweise in allen Verfahrensschritten.

15. Verfahren nach einem der vorhergehenden Ansprüche, **dadurch gekennzeichnet, dass** mindestens Schritt B und Schritt C in Gegenwart von Chloranion (Cl⁻), vorteilhafterweise in Form von Na⁺Cl⁻, NH₄⁺Cl⁻ und Mischungen davon ausgeführt werden.

16. Verfahren nach einem der vorhergehenden Ansprüche, **dadurch gekennzeichnet, dass** mindestens Schritt B und Schritt C in Gegenwart von Chloranion (Cl⁻) ausgeführt werden, wobei das gesamte Cl-Anion zwischen 0,1 und 100 mg, vorteilhafterweise zwischen 1 und 20 mg pro kg der Zusammensetzung in Schritt B bzw. Schritt C liegt.

17. Verfahren nach einem der vorhergehenden Ansprüche, **dadurch gekennzeichnet, dass** mindestens Schritt B und in Schritt C in Gegenwart von Chloranion Cl⁻ durchgeführt werden, wobei das Molverhältnis von Chloranion Cl⁻ zu Harnstoff zwischen 0,00001 und 0,01, vorteilhafterweise zwischen 0,00005 und 0,0001 liegt.

## Revendications

1. Procédé de préparation dans un réacteur discontinu d'au moins une tonne, avec avantage au moins 5 tonnes, de préférence au moins 10 tonnes d'un engrais azoté liquide ayant une teneur pondérale en azote située dans l'intervalle allant de 20 à 32%, ledit procédé comprenant au moins les étapes suivantes, mises en oeuvre à pression atmosphérique :
Etape A : on prépare une solution aqueuse d'urée et de formaldéhyde dans un réacteur discontinu, par mélange d'au moins les composés choisis parmi le groupe consistant en l'eau, le formaldéhyde, l'urée, l'UFC et leurs mélanges, et au moins une base, la solution aqueuse d'urée et de formaldéhyde ainsi préparée présentant un rapport molaire urée/formaldéhyde situé dans l'intervalle allant de 1,05 à 1,45, avantageusement de 1,2 à 1,4 ;
Etape B : une solution aqueuse d'ammoniaque ayant une teneur en ammoniaque située dans l'intervalle allant de 20 à 32% en poids est ajoutée à la solution aqueuse d'urée et de formaldéhyde préparée à l'étape A dans le réacteur discontinu, une partie de la base pouvant être ajoutée pour contrôler le pH ;
Etape C : on chauffe la solution préparée à l'étape B et on la maintient à une température allant de 80 à 100°C pendant au moins 30 minutes, mais avantageusement moins de 75 minutes, tout en contrôlant le pH entre 8 et 10,5 par addition de la base, la quantité de la solution ammoniacale ajoutée étant telle que le rapport molaire NH₃/urée se situe dans l'intervalle allant de 0,2 à 0,4, avantageusement de 0,25 à 0,30 ;
Etape D : on refroidit la solution préparée à l'étape C à moins de 40°C dans ou hors du réacteur discontinu ;
ledit procédé étant en outre **caractérisé en ce que** :
- la solution préparée à l'étape A est chauffée à une température située dans l'intervalle allant de 55 à 65°C pendant au moins 5 minutes ;
- lorsque la température de la solution préparée à l'étape A est supérieure à au moins 40°C, l'étape B est démarrée par addition progressive de la solution aqueuse d'ammoniaque pendant une période d'au moins 15 minutes, de manière à contrôler l'augmentation progressive de la température de la solution jusqu'à 80-95°C tout en contrôlant le pH à plus de 8 avec ou sans addition de base ;
- lorsque la température de la solution préparée à l'étape B est supérieure à 75°C, l'étape C est démarrée, et
- à l'étape B, l'augmentation progressive de la température de la solution est telle que l'augmentation de la température suit un schéma d'augmentation de la température sensiblement linéaire avec une marge d'erreur située dans l'intervalle allant de -2°C à +2°C.

2. Procédé selon la revendication 1, **caractérisé en ce que** l'étape B est réalisée pendant au moins 25 minutes, avantageusement au moins 35 minutes.

3. Procédé selon l'une quelconque des revendications 1 à 2, **caractérisé en ce que** la température finale de l'étape B se situe dans l'intervalle allant de 80 à 85°C.

4. Procédé selon l'une quelconque des revendications 1 à 3, **caractérisé en ce que** l'étape C est réalisée pendant au moins 45 minutes.

5. Procédé selon l'une quelconque des revendications précédentes, **caractérisé en ce qu'**à l'étape C, une base est ajoutée à la solution sensiblement pendant toute l'étape C, avantageusement sensiblement à vitesse constante.

6. Procédé selon l'une quelconque des revendications précédentes, **caractérisé en ce qu'**à l'étape C, une base sous forme d'une composition aqueuse contenant avantageusement, au moins 70% en poids d'eau, est ajoutée à la solution, ladite composition aqueuse de base étant préchauffée avant d'être ajoutée à la solution, avantageusement à une température supérieure à 60°C, de préférence située dans l'intervalle allant de 70 à 90°C.

7. Procédé selon l'une quelconque des revendications précédentes, **caractérisé en ce que** l'étape B est démarrée après que l'urée soit complètement dissoute à l'étape A.

8. Procédé selon l'une quelconque des revendications précédentes, **caractérisé en ce que** pendant l'étape B, le pH de la solution est contrôlé par addition d'une base afin d'assurer un pH situé dans l'intervalle allant de 8 à 10,5, avantageusement de 8,5 à 9,5.

9. Procédé selon l'une quelconque des revendications précédentes, **caractérisé en ce que** le chauffage à l'étape B est contrôlé de telle sorte que l'augmentation de la température est inférieure à 2°C/minute, avantageusement inférieure à 1,5°C par minute.

10. Procédé selon la revendication précédente, **caractérisé en ce que** le chauffage à l'étape B est contrôlé de telle sorte que l'augmentation de la température est inférieure à 2°C/minute, avantageusement inférieure à 1,5°C par minute.

11. Procédé selon l'une quelconque des revendications précédentes, **caractérisé en ce qu'**à l'étape D, le pH de l'engrais liquide est contrôlé dans l'intervalle allant de 8 à 10,5, avantageusement de 9,8 à 10,2 par addition d'une base.

12. Procédé selon l'une quelconque des revendications précédentes, **caractérisé en ce qu'**à l'étape D, la température de l'engrais liquide est réduite de 80-90°C à 40°C à une vitesse moyenne de plus de 1°C/minute.

13. Procédé selon l'une quelconque des revendications précédentes, **caractérisé en ce que** l'étape A est réalisée de la manière suivante :
- on mélange l'eau, l'UFC et la base et on chauffe à une température située dans l'intervalle allant de 55 à 65°C, avec addition éventuelle d'une base pour assurer un pH allant de 8 à 10,
- au mélange d'eau, d'UFC et de base à une température d'au moins 50°C, l'urée est ajoutée et mélangée, ledit mélange étant chauffé jusqu'à une température de 50-60°C et maintenu à une température de 50-60°C pendant au moins 10 minutes, le pH dudit mélange étant maintenu à une valeur située dans l'intervalle allant de 8 à 10, avantageusement de 8,5 à 9, par addition d'une base si nécessaire.

14. Procédé selon l'une quelconque des revendications précédentes, **caractérisé en ce qu'**au moins une base choisie parmi le groupe consistant en l'hydroxyde de sodium, la triéthanolamine et leurs mélanges est utilisée comme base dans l'une ou plusieurs des étapes du procédé, avantageusement dans toutes les étapes du procédé.

15. Procédé selon l'une quelconque des revendications précédentes, **caractérisé en ce qu'**au moins l'étape B et l'étape C sont réalisées en présence d'anion chlorure (Cl⁻), avantageusement sous forme de Na⁺Cl⁻, NH₄⁺Cl⁻ et de leurs mélanges.

16. Procédé selon l'une quelconque des revendications précédentes, **caractérisé en ce qu'**au moins l'étape B et l'étape C sont réalisées en présence d'anion chlorure (Cl⁻), la quantité totale d'ions Cl⁻ étant située dans l'intervalle allant de 0,1 à 100 mg, avantageusement de 1 à 20 mg par kg de la composition de l'étape B et l'étape C, respectivement.

17. Procédé selon l'une quelconque des revendications précédentes, **caractérisé en ce qu'**au moins l'étape B et l'étape C sont réalisées en présence d'anion chlorure (Cl⁻), le rapport anion chlorure Cl⁻/mole d'urée étant situé dans l'intervalle allant de 0,00001 et 0,01, avantageusement de 0,00005 et 0,0001.
